Europäisches Patentamt

European Patent Office

Office européen des brevets

(11) Veröffentlichungsnummer: **0 485 792 A2**

# EUROPÄISCHE PATENTANMELDUNG

(21) Anmeldenummer: **91118311.9**

(22) Anmeldetag: **28.10.91**

(51) Int. Cl.5: **B23K 7/08**

(30) Priorität: **16.11.90 DE 4036486**

(43) Veröffentlichungstag der Anmeldung:
**20.05.92 Patentblatt 92/21**

(84) Benannte Vertragsstaaten:
**BE DE ES FR GB IT NL SE**

(71) Anmelder: **MESSER GRIESHEIM GMBH**
**Hanauer Landstrasse 330**
**W-6000 Frankfurt/Main 1(DE)**

(72) Erfinder: **Agel, Manfred**

Gleimstrasse 1
W-6000 Frankfurt/M.(DE)
Erfinder: **Gollwitz, Karl**
Offenthaler Strasse 7
W-6073 Egelsbach(DE)
Erfinder: **Gutermann, Traugott**
Am Lerchenberg 9
W-6074 Rödermark(DE)
Erfinder: **Sonnenborn, Klaus**
Leharstrasse 4
W-6082 Mörfelden/Walldorf(DE)

(54) **Verfahren zum Brennschneiden unter einer Flüssigkeit.**

(57) Um Qualitätsschnitte bei einem Verfahren zum Brennschneiden unter einer Flüssigkeit, mit einer Brennschneiddüse, aus der ein Brenngas-Heizsauerstoff-Ge-misch strömt, zu erzielen, wird ein Brenngasüberschuß des ausströmenden Brenngas-Heizsauerstoff-Gemisches eingestellt, dem außerhalb der Brennschneiddüse Sauerstoff zugemischt wird.

Fig. 1

EP 0 485 792 A2

Die Erfindung betrifft ein Verfahren zum Brennschneiden unter einer Flüssigkeit nach dem Oberbegriff des Anspruches 1 und eine Vorrichtung zur Durchführung des Verfahrens nach dem Oberbegriff des Anspruches 9.

Beim Brennschneiden an der Atmosphäre wird die Werkstückoberfläche mit einer Brenngas-Sauerstoff-Flamme eines Gasbrenners auf mindestens Zündtemperatur des Werkstoffes erwärmt, dann oxidiert Schneidsauerstoff einen Teil des Schnittfugen-Werkstoffes und die sehr stark exotherme Verbrennungsreaktion liefert die Wärme zum Schmelzen des benachbarten Werkstoffes. Vom Reststrahl des Schneidsauerstoffes wird die Schmelze, die aus Oxiden und nicht oxidiertem Metall besteht, aus der Schnittfuge geblasen.

Der entscheidende Teil des Gasbrenners ist die Brennschneiddüse; sie formt den Schneidsauerstoffstrahl, das eigentliche Werkzeug des Brennschneidens.

Austrittsöffnungen für die Heizflammen sind rotationssymmetrisch um den Schneidsauerstoffstrahl angeordnet, um bei vertikal nach unten blasendem Schneidsauerstoffstrahl in allen horizontalen Richtungen schneiden zu können.

Für das Brennschneiden von Werkstückdicken bis 150 mm ist das schneller brennende Brenngas Acetylen in den meisten Anwendungsfällen von Vorteil. Die größtmöglichen Schneidgeschwindigkeiten hängen von den Eigenschaften des Schneidsauerstoffstrahles und von der Dicke der Werkstücke sowie von dem Werkstoff ab. Auch die Güte der Schnittfläche setzt der Schneidgeschwindigkeit Grenzen.

Die Heizflamme wird mit Ventilen eingestellt. Bei der normalen Einstellung der Heizflamme werden Brenngas und Sauerstoff im Verhältnis 1 (Brenngas) zu 1,1 bis 1,3 (Heizsauerstoff) gemischt. Die Verbrennung dieses Gasgemisches ist unvollständig. Die dabei entstehenden Gase Kohlenoxid und Wasserstoff bilden in der Flamme eine sauerstofffreie (reduzierende) Zone. Der für die vollständige Verbrennung des Brenngas-Heizsauerstoff-Gemisches erforderliche Sauerstoff wird vom Flammenmantel aus der umgebenden Luft entnommen.

Ausgehend von diesem Stand der Technik beim Brennschneiden an der Atmosphäre, liegt der Erfindung die Aufgabe zugrunde, ein Verfahren anzugeben, mittels dem Gasbrenner zum thermischen Trennen unter Wasser eingesetzt werden können.
Diese Aufgabe wird erfindungsgemäß durch die kennzeichnenden Merkmale des Anspruches 1 gelöst.

Durch die Erfindung hat sich überraschender Weise gezeigt, daß mit einem Autogenbrenner unter einer Flüssigkeit, vorzugsweise Wasser, Brennschnitte mit einer Schnittqualität der Schnittfläche gemäß DIN 2310, Teil 3, Güteklasse 1 bei nahezu gleicher Schneidgeschwindigkeit erzeugt werden können. Hierbei ist die Qualität der unter Wasser geschnittenen Schnittflächen besser, weil sich durch die kontinuierliche Kühlung des unmittelbar an die Schneidstelle angrenzenden Werkstoffbereiches eine ausgeglichene Wärmebilanz über die gesamte Werkstoffdicke einstellt, wodurch ein Aufschmelzen der Schnittfuge an der Werkstoffoberfläche ebenso verhindert wird, wie ein Ablenken des Schneidsauerstoffstrahles an der Austrittsseite der Schnittfugen. Es werden nahezu parallele Schnittflächen mit geringstem Riefennachlauf erreicht.

Hinzu kommt, daß sich ein poröser, leicht ablösender Schneidbart bildet. Der Lärmpegel wird bei entsprechender Wassertiefe wensentlich gesenkt. Stäube und Rauche werden im Wasser gebunden.

Ein Ausbildungsbeispiel ist in der Zeichnung dargestellt und wird im folgenden näher beschrieben.

Es zeigen

Fig. 1      eine thermische Schneideinrichtung mit einem Gasbrenner nach der Erfindung in schematischer Darstellung.

Fig. 2      eine Draufsicht auf die Ausströmseite des Gasbrenners mit zugeordneter Gasstrahldüse.

Fig. 3      eine Ansicht der Schnittfuge wie sie sich beim Brennschnitt an der Atmosphäre ausbildet.

Fig. 4      eine Ansicht der Schnittfuge wie sie sich beim Brennschnitt nach der Erfindung ausbildet.

Fig. 5      eine Ansicht der Schnittfläche wie sie sich beim Brennschnitt an der Atmosphäre ausbildet.

Fig. 6      eine Ansicht der Schnittfläche wie sie sich beim Brennschnitt nach der Erfindung ausbildet.

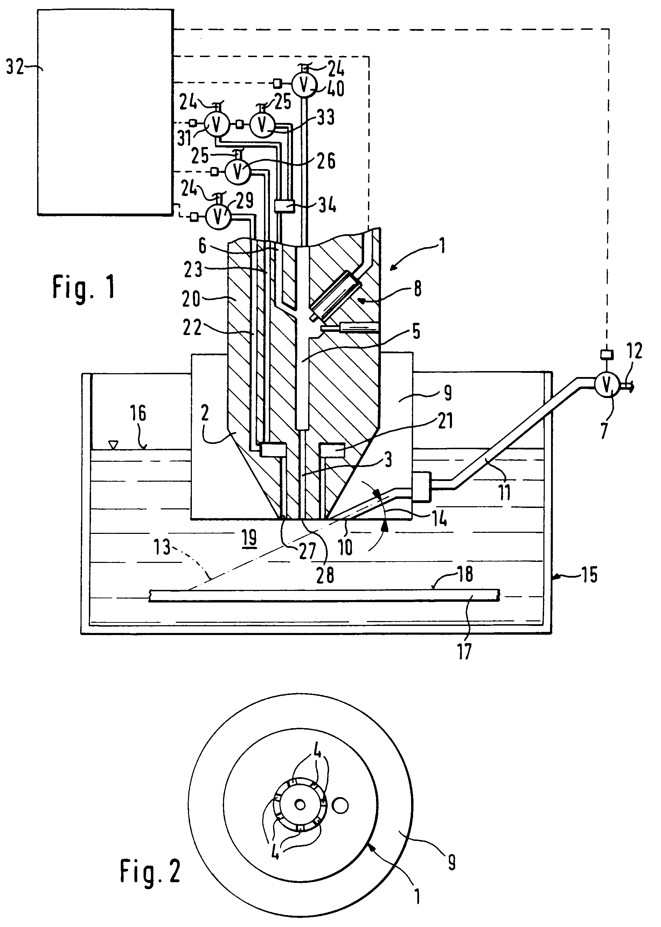

In der Fig. 1 ist eine Vorrichtung zum thermischen Brennschneiden mit 1 bezeichnet. Der nur schematisch dargestellte Gasbrenner 20 weist eine Schneiddüse 2 auf. Der zentrisch in der Schneiddüse 2 angeordnete Schneidsauerstoffkanal 3 ist rotationssymmetrisch von Heizgaskanälen 4 umgeben und über eine Schneidsauerstoffzuführung 5 mit einem vorzugsweise elektrisch ansteuerbaren Ventil 40 mit einer Sauerstoffversorgung 24 verbunden. In dem mit den Heizgaskanälen 4 verbundenen Ringraum 21, der eingangsseitig über eine Heizsauerstoffzuführung 22 und eine Brenngaszuführung 23 an eine Sauerstoffversorgung 24 und eine Brenngasversorgung 25 angeschlossen ist, wird ein Heizgasgemisch erzeugt.

Es ist selbstverständlich auch möglich, anstelle der gasemischenden Düse des Gasbrenners 20 einen Injektor-Gasbrenner, bei dem die Mischung von Brenngas und Heizsauerstoff in einem Injektor des Brenners stattfindet, einzusetzten. Derartige Injektor-Gasbrenner sind bekannt und brauchen daher nicht näher beschrieben zu werden.

In bevorzugter Ausbildung des Gasbrenners 20 mündet in die mit dem Schneidsauerstoffkanal 3 verbundene Schneidsauerstoffzuführung 5 eine separate Zündgasgemischzuführung 6, die über einen Injektor 34 und vorzugsweise elektrisch ansteuerbare Ventile 31, 33 mit einer Brenngas- und Sauerstoffversorgung 24 , 25 verbunden ist. Der Ausströmöffnung der Zündgasgemischzuführung 6 gegenüberliegend ist ein mit der Scneidsauerstoffzuführung 5 in Verbindung stehendes elektrisches Zündgerät 8 innerhalb des Gasbrenners 20 angeordnet. Das Zündgerät 8 besteht im wesentlichen aus einer Zündelektrode mit gegenüberliegendem Massestift, mit denen ein Zündfunke erzeugt wird.

Die Schneiddüse 2 ist von einer Gasstrahldüse 9 wenigstens im Bereich der Ausströmöffnungen 27, 28 der Heizgaskanäle 4 und des Schneidsauerstoffkanales 3 formschlüssig umgeben. Dabei kann die Gasstrahldüse 9 mit der Schneiddüse bündig oder bis zu 5 mm überstehen. Hierdurch kann vorteilhaft eine Stabilisierung bei langsam verbrennenden Brenngasen erreicht werden. In der Gasstrahldüse 9 ist eine Austrittsöffnung 10 vorgesehen, die über eine Blassauerstoffzuführung 11 und ein Ventil 7 mit einer Sauerstoffversorgung 12 verbunden ist. Die Achse 13 der Ausströmöffnung 10 verläuft unter einem Winkel 14 zwischen 10° und 45°, vorzugsweise jedoch unter einem Winkel von 25°. Das der Vorrichtung 1 zugeordnete Wasserbecken ist in seiner Gesamtheit mit 15, die Wasseroberfläche mit 16 bezeichnet. Aufbau und Funktionsweise derartiger Wasserbecken sind bekannt und brauchen daher nicht näher erläutert zu werden.

In dem Wasserbecken ist ein Werkstück 17 auf einem nicht näher dargestellten Brennschneidtisch angeordnet; die Oberfläche des Werkstückes ist mit 18 bezeichnet ist.

Die vorstehend beschriebenen Ventile 7, 26, 29, 30, 31, 33, 40) sind bevorzugt als Proportional-Druckventil ausgebildet.

Die Einrichtung arbeitet wie folgt:
In den Rechner 32 (Microprozessor) werden die Daten für die entsprechenden Verfahrensschritte des Brennschneidvorganges in einem Speicher abgelegt, in dem weitere Daten wie Werkstoffart, Werkstückdicke und dergleichen gespeichert sind. Der Gasbrenner 20 mit der ihm zugeordneten Gasstrahldüse 9 ist oberhalb der Wasseroberfläche 16 in einer Parkposition angeordnet. Nach der manuellen Startfreigabe erhält das Ventil 33 das Signal "Zündsauerstoff ein". Zündsauerstoff strömt nun über die Zündgasgemischzuführung 6 in den Schneidsauerstoffkanal 3 und tritt aus der Austrittsöffnung 28 aus. Gleichzeitig erhält das Ventil 29 über die gestrichelt gezeichneten Steuerleitungen von dem Rechner 32 das Signal "Heizsauerstoff ein". Dieser strömt dann über die Heizsauerstoffzuführung 22, den Ringraum 21 in die Heizgaskanäle 4 und aus den Ausströmöffnungen 27. Das Ventil 7 wird geöffnet, so daß Sauerstoff vorzugsweise in Form eines Strahles aus der Ausströmöffnung 10 austritt. Anschließend wird der Gasbrenner 20 über die nicht näher dargestellten Brennerhöhen- und Seitenantriebe von der Parkposition in die Anheizposition verfahren, wobei er in das Wasserbecken 15 eintaucht. Nach dem Eintauchen, aber vor Erreichen der "richtigen" Höhe über dem Werkstück, werden das Ventil 33 und Ventil 31 geöffnet. Zündbrenngas und Zündsauerstoff vermischen sich in dem Injektor 34 und strömen als Zündbrenngasgemisch in den Bereich des Zündgerätes 8 und aus der Ausströmöffnung 28; Heizbrenngas mischt sich in dem Ringraum 21 mit dem Heizsauerstoff und strömt als Heizgasgemsich aus der Ausströmöffnung 27 der Heizgaskanäle. Dabei ist der Brenngasanteil, vorzugsweise des Brenngases Acetylen, an dem erzeugten Brenngas-Heizsauerstoff-Gemisch, bezogen auf den Anteil des Heizsauerstoffes, größer (Brenngasüberschuß). Versuche haben gezeigt, daß der Anteil größer 1,7 und kleiner 2,5 mal dem Anteil des Heizsauerstoffes sein muß, wobei die Qualität der Schnittflächen 37 bei nahezu Atmosphären-Schneidgeschwindigkeiten bei einem Anteil größer 1,8 und kleiner 2,2, vorzugsweise 1,85, des Brenngases, bezogen auf den Anteil des Heizsauerstoffes am Vorteilhaftesten sind. Beim Einschalten des Zündbrenngases und des Heizbrenngases wird der Druck des aus der Ausströmöffnung 10 strömenden Sauerstoffes erhöht. Zeitverzögert erhält das Zündgerät 8 von dem Rchner 32 den Steuerbefehl "Zünden". Über den bzw. die Zündfunken wird das Zündgasgemisch gezündet. Die Zündflamme tritt aus der Ausströmöffnung 28 für den "Schneidsauerstoff" aus und zündet das Brenngas-Heizsauerstoff-Gemisch mit erhöhtem Brenngasanteil. Die Zündung wird abgeschaltet, das Ventil 31 für das Zündbrenngas geschlossen und der aus der Ausströmöffnung 10 austretende Sauerstoffdruck erniedrigt.

Der Gasbrenner 20 fährt nun mittels seiner Seiten- und Höhenantriebe auf eine vorgegebene Position, vorzugsweise über der Werkstückoberfläche 18 und heizt diese für den Lochstechvorgang bis zum Erreichen der Zündtemperatur des Werkstoffes vor. Hierzu wird der Druck des Heizsauerstoffes bis zum Erreichen der Zündtemperatur des Werkstoffes erhöht. Nach dem Durchstich durch das Werkstück wird der Druck des Heizsauerstoffes erniedrigt und der Schneidsauerstoff zugeschaltet. Über eine Verrieglung wird der Zündsauerstoff automatisch beim Einschalten des Scneidsauerstoffes ausgeschaltet. Das Ventil 23 wird geschlossen. Über Antriebe wird der Schneidbrenner nun entsprechend den vorgegebenen Koordinaten verfahren und das Werkstück brenngeschnitten, wobei aus der Brennschneiddüse ein Brenngas-Heizsauerstoff-Gemisch mit Brenngasüberschuß austritt, dann außerhalb der Brennerdüse über den aus der Ausströmöffnung 10 austretenden Sauerstoffstrahl Sauerstoff zugemischt wird.

Ist der Brennschnitt beendet, wird der Schneidsauerstoff ausgeschaltet und über eine Kopplung der Zündsauerstoff eingeschlatet. Das Heizbrenngas wird abgeschaltet und der Brenner über die Wasseroberfläche 16 verfahren. Anschließend wird der Zündsauerstoff, der Heizsauerstoff und der aus der Ausströmöffnung 10 austretende Sauerstoff, welche ein Eindringen der Flüssigkeit in den Gasbrenner verhindern, abgeschaltet.

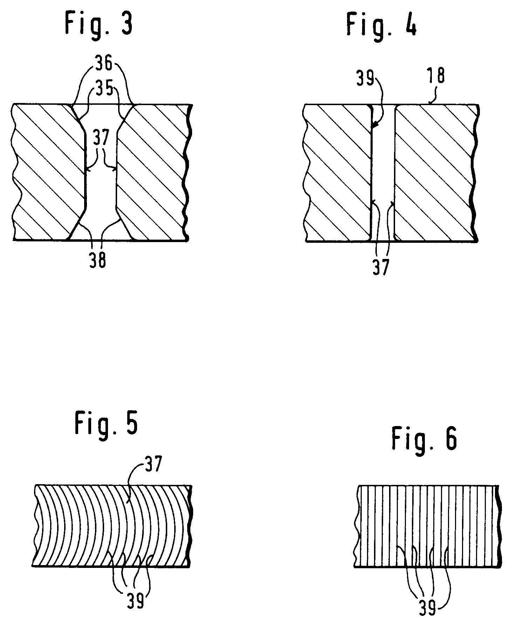

In den Fig. 3 und 5 ist eine Schnittfuge und eine Schnittfläche dargestellt, wie sie sich nach dem Brennschnitt an Atmosphäre ausbildet. Die Schnittfuge gemäß Fig. 3 weist einen konischen Einlauf 35 mit zur Werkstückoberfläche 18 gerundeten Kanten 36 auf, der sich im mittleren Dickenbereich des Werkstückes 17 mit im wesentlichen parallelen Schnittflächen 37 fortsetzt. An der Austrittsseite des Schneidsauerstoffstrahles findet wieder eine konische Aufweitung 38 der Schnittflächen 37 statt. Dabei entstehen an den Schnittflächen 37 kommaähnliche Riefen 39, die sich entgegengesetzt oder zur Schneidrichtung krümmen.

Im Gegensatz hierzu weist die nach der Erfindung unter einer Flüssigkeit brenngeschnittene Schnittfuge gemäß Fig. 4 nahezu parallele Schnittflächen 37 über die gesamte Werkstückdicke auf, wobei lediglich die Kanten zur Werkstückoberfläche 18 und zur Werkstückunterfläche leicht gerundet sind.

In Fig. 6 ist der Verlauf der Riefen 39 an den Schnittflächen 37 von unter einer Flüssigkeit brenngeschnittenen kohlenstoffhaltigen Stählen dargestellt. Wie aus der Darstellung ersichtlich, verlaufen die Riefen 39 nahezu geradlinig.

**Patentansprüche**

1. Verfahren zum Brennschneiden unter einer Flüssigkeit, vorzugsweise unter Wasser, mit einer Brennschneiddüse, aus der ein Brenngas-Heizsauerstoff-Gemisch strömt, gekennzeichnet durch einen Brenngasüberschuß des ausströmenden Brenngas-Heizsauerstoff-Gemisches.

2. Verfahren nach Anspruch 1, gekennzeichnet durch einen Anteil größer 1 des Brenngases bezogen auf den Anteil des Heizsauerstoffes.

3. Verfahren nach Anspruch 1 oder 2, gekennzeichnet durch einen Anteil größer 1,7 und kleiner 2,5 bezogen auf den Anteil des Heizsauerstoffes.

4. Verfahren nach einem der Ansprüche 1 bis 3, gekennzeichnet durch einen Anteil größer 1,8 und kleiner 2,2, vorzugsweise 1,85, des Brenngases bezogen auf den Anteil des Heizsauerstoffes.

5. Verfahren nach einem der Ansprüche 1 bis 4, dadurch gekennzeichnet, daß dem ausströmenden Brenngas-Heizsauerstoff-Gemisch außerhalb der Brennschneiddüse Sauerstoff zugemischt wird.

6. Verfahren nach Anspruch 5, dadurch gekennzeichnet, daß der Anteil des außerhalb der Brennschneiddüse zugemischten Sauerstoffes das 2 bis 4fache des aus der Brennschneiddüse strömenden Anteiles des Heizsauerstoffes beträgt.

7. Verfahren zum Brennschneiden unter einem Flüssigkeit, vorzugsweise unter Wasser, mit einer Brennschneiddüse, dadurch gekennzeichnet, daß die automatische Steuerung gemäß folgenden Verfahrensschritten erfolgt:
   a) Einschalten des Zündsauerstoffes, des Heizsauerstoffes und des von außerhalb der Düse zugeführten Sauerstoffes bei in der Atmosphäre angeordnetem Gasbrenner;
   b) Eintauchen des Gasbrenners in die Flüssigkeit;
   c) Einschalten des Zündbrenngases und des Heizbrenngases sowie ein Erhöhen des Druckes des von außerhalb der Düse zugeführten Sauerstoffes;
   d) Einschalten der elektrischen Zündung und Erzeugen eines Zündfunkens;
   e) Abschalten des Zündbrenngases und Verringern des Druckes des von außerhalb der Brennschneiddüse zugeführten Sauerstoffes;
   f) Positionieren des Gasbrenners in vorgegebenem Abstand über der Werkstückoberfläche;
   g) Anheizen der Werkstückoberfläche auf Zündtemperatur;

h) Absenken des Druckes des Heizsauerstoffes;

i) Einschalten des Schneidsauerstoffes mit verringertem Druck und gleichzeitiges Abschalten des Zündsauerstoffes:

j) Erhöhen des Druckes des Schneidsauerstoffes und Beginnen des Brennschnittes.

8. Gas zum Brennschneiden unter einer Flüssigkeit,
gekennzeichnet durch
einen Brenngasanteil größer 1,5 und kleiner 2,4 bei einem Anteil des Heizsauerstoffes von 1.

9. Vorrichtung zum Brennschneiden unter einer Flüssigkeit mit einer Brennschneiddüse,
dadurch gekennzeichnet,
daß die Brennschneiddüse eine Ausströmöffnung (28) die Schneidsauerstoff in Form eines Strahles liefert, eine Mehrzahl von Heizöffnungen (27), welche um die Ausströmöffnung angeordnet sind und Mittel aufweist, zum Versorgen der Heizöffnungen (27) mit einem Gemisch aus einem Brenngas und einem Heiz- sauerstoff, das einen Brenngasüberschuß auf- weist.

10. Vorrichtung nach Anspruch 9,
dadurch gekennzeichnet,
daß die Düse von einer Gasstrahldüse (9) umgeben ist, die eine in den Bereich zwischen den Düsenöffnungen (27, 28) und der Werk- stückoberfläche (18) gerichteten Austrittsöff- nung für einen Gasstrahl, vorzugsweise Sauerstoffstrahl, aufweist.

11. Vorrichtung nach Anspruch 9 oder 10,
dadurch gekennzeichnet,
daß ihr eine Steuerung für die Drücke der Gase zugeordnet ist, die aus elektrisch steuerbaren Ventilen (7, 26, 29, 30, 31, 33, 40), vorzugsweise Poroptional-Druckventilen, und einem Rechner (32) besteht, in dem mindestens die Daten für die Drücke eingebbar sind und der in Abhängigkeit von den Daten Steuersignale zum Einstellen der Drücke an den Ven- tilen erzeugt.

Fig. 1

Fig. 2

Fig. 3

Fig. 4

Fig. 5

Fig. 6